# EUROPÄISCHE PATENTSCHRIFT

(11) **EP 0 545 990 B1**
(45) Veröffentlichungstag und Bekanntmachung des Hinweises auf die Patenterteilung: **15.06.1994**
(21) Anmeldenummer: 91915031.8
(22) Anmeldetag: 26.08.1991
(51) Int. Cl.: B23Q 5/58, B23Q 5/56

(54) **STILLSTEHENDE SPINDEL MIT SPIELFREIER ÜBERLASTKUPPLUNG FÜR SCHLITTENANTRIEB VON WERKZEUGMASCHINEN**
STATIONARY SPINDLE WITH BACKLASH-FREE OVERLOAD COUPLING FOR THE CARRIAGE DRIVE OF A MACHINE TOOL
BROCHE STATIQUE A ACCOUPLEMENT DE SURCHARGE SANS JEU POUR ENTRAINER LE CHARIOT DE MACHINES-OUTILS

(30) Priorität: 28.08.1990 DE 9012336 U
(43) Veröffentlichungstag der Anmeldung: 16.06.1993
(73) Patentinhaber: Christian Mayr GmbH & Co. KG, 87665 Mauerstetten (DE)
(72) Erfinder: KLINGLER, Günther, D-8939 Oberostendorf (DE); DROPMANN, Christoph, D-8950 Kaufbeuren (DE); EISENBURGER, Josef, D-8939 Türkheim (DE)
(74) Vertreter: Ruschke, Hans Edvard, Dipl.-Ing.
(86) Internationale Anmeldenummer: EP9101618
(87) Internationale Veröffentlichungsnummer: WO9203254

(56) Entgegenhaltungen:
- AT-B- 0 288 821
- DD-A- 0 205 109
- FR-A- 2 584 793
- Industrieanzeiger, Nr.57, 18.07.1984, S. 22, 23

## Beschreibung

Die vorliegende Erfindung betrifft eine Werkzeugmaschine mit einem Schlitten und einer Vorrichtung zum Verstellen des Schlittens mittels eines Schlittenverstellmotors, nach dem Oberbegriff des Anspruches 1.

Um im Kollisionsfall eines Schlittens einer Werkzeugmaschine mit einem anderen Teil der Maschine keine größeren Beschädigungen hervorzurufen, ist es üblich, in Vorschubantrieben von Werkzeugmaschinen Überlastkupplungen einzusetzen. Hierbei gibt es bisher im wesentlichen drei Variationen. Zum Beispiel kann der Schlittenverstellmotor über einen Zahnriemen oder dergl. auf eine Überlastkupplung wirken, die auf der Spindel angeordnet ist, die über die Spindelmutter den Schlitten verstellt. Zum anderen kann die Überlastkupplung unmittelbar auf der Motorwelle sitzen und zum Beispiel über einen Zahnriemen auf eine Zahnriemenscheibe einwirken, die auf der Spindel sitzt. Zum Dritten wird die Überlastkupplung mit ihrer Abtriebsseite unmittelbar auf der Spindel angeordnet und ist mit ihrer Antriebsseite über eine elastische Kupplung zum direkten Antrieb der Spindel durch den Antriebsmotor verbunden. Hierbei handelt es sich um einen Stand der Technik, der allgemein bekannt ist.

Eine weitere Absicherungsmöglichkeit besteht direkt an der Spindelmutter, die durch eine spezielle Spindelmutter mit Überlastsicherung auf dem Markt bekannt ist (Industrie-Anzeiger Nr. 57 vom 18.7.84, S. 22/23).

Es ist die der vorliegenden Erfindung zugrunde liegende Aufgabe, im Kollisionsfall die aufprallenden Massen so gering wie möglich zu gestalten und deshalb soll im Überlastfall so viel wie möglich abgekuppelt werden. Diese Aufgabe wird durch die Merkmale des Patentanspruches 1 gelöst. Durch diese Anordnung werden die Schwungmassen sehr gering gehalten, weil die Spindel mit der Kupplung im normalen Betriebszustand still steht und nur der Schlitten mit einem aufgesetzten Antriebsmotor bewegt wird.

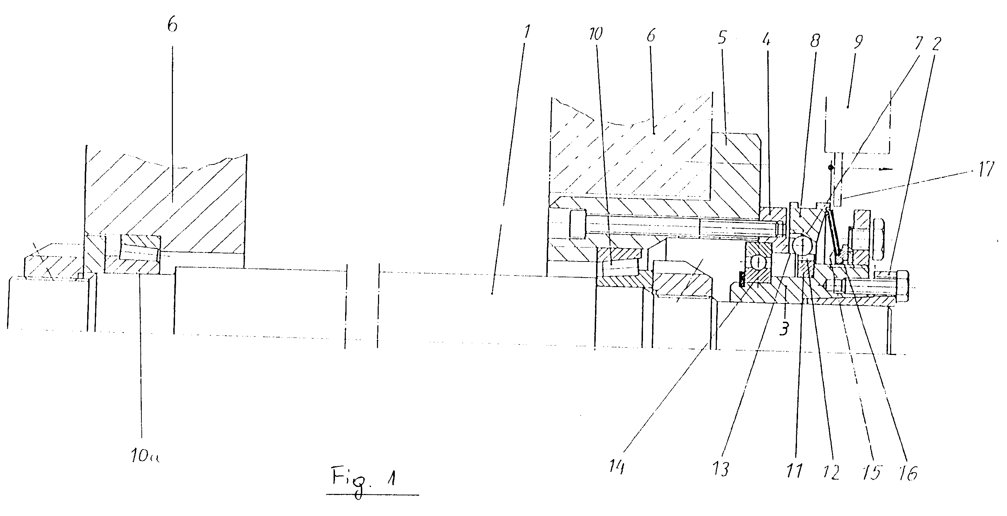

In der beigefügten Zeichnung ist eine prinzipielle Darstellung der Spindellagerung mit der Überlastkupplung gezeigt. Der Schlitten und die mit der Spindel in Eingriff stehende Spindelmutter, die an dem Schlitten gelagert ist und von einem auf dem Schlitten angeordneten Motor betätigt wird, sind in der Zeichnung weggelassen, da es sich hierbei um herkömmliche Elemente handelt.

Bei der Spindel 1 handelt es sich um eine im normalen Betriebszustand feststehende Spindel, die z.B. eine Kugelrollspindel sein kann. Die Spindel ist in herkömmlicher Weise mit zwei Wälzlagern, zum Beispiel Kegel- oder Rollenlagern 10, 10a im Gehäuse 6 der nicht näher dargestellten Werkzeugmaschine gelagert. An dem in der Zeichnung rechten Ende der Spindel ist die spielfreie, drehsteife Überlastkupplung auf der Spindel angeordnet, und zwar mit Hilfe einer Konusbuchse 2, die die Nabe 3 der Überlastkupplung auf der Spindel festlegt. Auf der Nabe 3 sitzt, mit dieser fest verbunden, der scheibenförmige Antriebsflansch 11 der Überlastkupplung mit radialen Ausnehmungen 12 auf dem äußeren Umfang desselben zur Aufnahme von Kugeln 7, die durch ein mittels Tellerfedern 15 belastetes Schaltteil 8 in diese Ausnehmungen und weitere axial gerichtete Ausnehmungen 13 im Abtriebsflansch 4 der Überlastkupplung eingedrückt werden. Indem die Trennfuge zwischen dem Antriebsflansch 11 und dem Abtriebsflansch 4 im wesentlichen kegelförmig verläuft und die Kugeln 7 gleichzeitig in die Ausnehmungen 12, 13 im Antriebsflansch 11 bzw. Abtriebsflansch 4 eingedrückt werden, nämlich etwa in Richtung des Kegelmantels, wird eine besondere Art einer spielfreien Kupplung vorgesehen, wie sie im Prinzip im Stand der Technik bekannt ist; es können aber auch andere bekannte Arten spielfreier, drehsteifer Kupplungen verwendet werden. Der Abtriebsflansch 4 der Überlastkupplung ist mit einem im Gehäuse 6 angeordneten feststehenden Zwischenflansch 5 verschraubt und gleichzeitig über ein Wälzlager 10 und ein Kugellager 14 gegen die Nabe 3 der Überlastkupplung abgestützt.

Die Vorspannung der Tellerfedern 15, welche in axialer Richtung auf das Schaltteil 8 einwirken, können in bekannter Weise über eine Einstellmutter 16 verstellt werden, womit gleichzeitig das Grenzdrehmoment der Überlastkupplung festgelegt wird.

Im Überlastfall treten die Kugeln 7 aus den Ausnehmungen 12, 13 im An- und Abtriebsflansch 11, 4 aus, so daß das Schaltteil 8 sich entgegen der Federdruckbeaufschlagung in der Zeichnung nach rechts bewegt und aufgrund dieses Hubes einen Stößel 17 eines Endschalters 9 betätigt, der zum Stillsetzen bzw. Abschalten des nicht näher dargestellten Schlittenverstellmotors angeschlossen ist.

Die Funktion der so weit beschriebenen Anordnung ist folgende. Die Spindel steht im normalen Betrieb still und auf ihr verdreht sich die nicht näher dargestellte Spindelmutter, die mit dem Werkzeugmaschinenschlitten verbunden ist und von dem dort angeordneten Schlittenverstellmotor betätigt wird. Wenn im normalen Werkzeugmaschinenbetrieb der Schlitten auf ein Hindernis trifft, d.h. wenn der Überlastfall eintritt, wird die Spindel 1 um einen bestimmten Winkel aus der Ruhelage heraus verdreht und das Drehmoment wird über die Konusbuchse 2 auf die Nabe 3 der Überlastkupplung eingeleitet. Der Abtriebsflansch 4 der Überlastkupplung ist über den Zwischenflansch 5 mit dem Gehäuse 6 der Werkzeugmaschine verbunden. Dieses Teil ist absolut starr und durch die Drehbewegung der Spindel 1 wird die Nabe 3 der Überlastkupplung verdreht, so daß die Kugeln 7 ausrasten, d.h. aus den Ausnehmungen 12, 13 im An- und Abtriebsflansch 11, 4 austreten und das Schaltteil 8 in axialer Richtung verstellen, so daß der Endschalter 9 über den Schaftstößel 17 betätigt wird und den Antriebsmotor des Werkzeugschlittens abschaltet.

Durch die vorliegende Erfindung wird erreicht, daß die bewegten Massen geringer sind als im Stand der Technik. Zusätzlich ist der dynamische Anteil der zu bewegenden Massen im Überlastfall geringer. Vorzugsweise ist die Überlastkupplung spielfrei ausgebildet und weist eine hohe Drehsteifigkeit auf, d.h. sie bleibt bis zum Erreichen der eingestellten Drehmomentgrenze möglichst drehstarr.

## Patentansprüche

1. Werkzeugmaschine mit einem Schlitten und einer Vorrichtung zum Verstellen des Schlittens mittels eines Schlittenverstellmotors, mit einer stehenden Spindel (1) und einer darauf angeordneten Spindelmutter, die mit dem Schlitten verbunden ist, und mit einer Überlastkupplung (3, 4, 8) zur Absicherung der Verstellanordnung, dadurch gekennzeichnet, daß die stehende Spindel (1) mit Hilfe der Überlastkupplung (3,4,8) an einem feststehenden Teil (6) der Werkzeugmaschine drehstarr befestigt ist und erst nach Überschreiten des eingestellten Grenzdrehmomentes der Überlastkupplung verdrehbar ist.

2. Werkzeugmaschine nach Anspruch 1, dadurch gekennzeichnet, daß die Überlastkupplung spielfrei und sehr drehsteif, d.h. im wesentlichen drehstarr bis zum Erreichen des Überlastpunktes ausgebildet ist.

3. Werkzeugmaschine nach Anspruch 1 oder 2, dadurch gekennzeichnet, daß die Überlastkupplung zwei Kupplungshälften in Gestalt eines Antriebsflansches (11) und eines Abtriebflansches (4) aufweist, wobei letztere jeweils beiderseits der Trennebene der Kupplungshälften Ausnehmungen (12, 13) aufweisen, und daß Mitnehmerkörper (Kugeln 7) in Richtung der Trennebene gleichzeitig in die Ausnehmungen (12, 13) beiderseits der Trennebene eingepreßt werden.

4. Werkzeugmachine nach einem der Ansprüche 1 bis 3, dadurch gekennzeichnet, daß der Schlittenverstellmotor auf dem Schlitten angeordnet ist und zur Verdrehung der Spindelmutter angeschlossen ist.

5. Werkzeugmachine nach einem der voranstehenden Ansprüche, dadurch gekennzeichnet, daß ein mit dem Schlittenverstellmotor verbundener Sensor oder Endschalter an der Überlastkupplung angeordnet ist und den Motor bei Erreichen des Grenzdrehmomentes stillsetzt.

6. Werkzeugmaschine nach einem der voranstehenden Ansprüche, dadurch gekennzeichnet, daß der Abtriebsflansch (4), welcher mit dem Zwischenflansch (5) verbunden ist, durch ein zusätzliches Lager (14) gegen die Spindel (1) abgestützt ist.

7. Werkzeugmaschine nach einem der voranstehenden Ansprüchem dadurch gekennzeichnet, daß die Trennebene zwischen den beiden Flanschen (11, 4) kegelmantelförmig mit der Spindel (1) als Rotationsachse verläuft.

## Claims

1. A machine tool comprising a carriage and means for adjusting the carriage position by means of a carriage advance motor, a stationary screw (1) and a screw nut mounted on the spindle and connected with the carriage, and overload coupling means (3, 4, 8) for the protection of the advancing mechanism, **characterized** in that stationary screw (1) is connected by overload coupling means (3, 4, 8) with a stationary member (6) of the machine tool in a rotationally rigid relationship, said screw not being rotatable until the pre-set torque limit torque of the overload coupling is exceeded.

2. Machine tool as in claim 1, **characterized** in that the overload coupling is backlash-free and very rigid rotationally, i.e. substantially rotationally rigid until the overload limit has been reached.

3. Machine tool as in claim 1, **characterized** by the overload coupling comprising two coupling sections in the form of an input flange (11) and an output flange (4), recesses (12, 13) in the flanges on both sides of the plane separating the coupling sections, and entrainment members (balls 7) simultaneously urged into recesses (12, 13) on both sides of the separating plane in the direction towards that plane.

4. Machine tool as in any one of claims 1 to 3, **characterized** in that carriage advance motor is mounted on the carriage and connected to rotate to rotate the screw nut.

5. Machine tool as in any one of the preceding claims, **characterized** in that a sensor or limit switch connected with the carriage advance motor is mounted on the overload coupling to disconnect the motor when the torque limit is reached.

6. Machine tool as in any one of the preceding claims, **characterized** in that output flange (4) is connected with intermediate flange (5) and is supported by screw (1) via an additional bearing assembly (14).

7. Machine tool as in any one of the preceding claims, **characterized** in that the separating plane between flanges (11, 4) forms a conical envelope with screw (1) as its axis of rotation.

## Revendications

1. Machine-outil avec un chariot et un dispositif pour déplacer le chariot au moyen d'un moteur de déplacement, comprenant une broche stationnaire (1) et un écrou agencé sur ladite broche, cet écrou étant relié au chariot, et comprenant un dispositif de découplement par surcharge (3, 4, 8) pour la sécurité du dispositif de déplacement, caractérisée en ce que la broche stationnaire (1) est fixée de manière rigide en rotation à l'aide du dispositif de découplement par surcharge (3, 4, 8) sur une pièce fixe (6) de la machine-outil, et ne peut être mise en rotation que lors d'un dépassement du couple limite de rotation réglé pour le dispositif de découplement.

2. Machine-outil selon la revendication 1, caractérisée en ce que le dispositif de découplement par surcharge est réalisé sans jeu et avec une rigidité importante vis-à-vis de la torsion, c'est-à-dire qu'il est sensiblement rigide en torsion jusqu'à ce qu'on atteigne le point de surcharge.

3. Machine-outil selon l'une ou l'autre des revendications 1 et 2, caractérisé en ce que le dispositif de découplement par surcharge comprend deux moitiés d'accouplement sous la forme d'une bride menante (11) et d'une bride menée (4), ces dernières présentant chacune des évidements (12, 13) de part et d'autre du plan de séparation des moitiés d'accouplement, et en ce que des corps d'entraînement (billes 7) sont pressés en direction du plan de séparation et simultanément dans les évidements (12, 13) de part et d'autre du plan de séparation.

4. Machine-outil selon l'une quelconque des revendications 1 à 3, caractérisée en ce que le moteur de déplacement du chariot est agencé sur le chariot et en ce qu'il est raccordé afin d'entraîner en rotation l'écrou de la broche.

5. Machine-outil selon l'une quelconque des revendications précédentes, caractérisée en ce qu'il est prévu un capteur ou un commutateur de fin de course agencé sur le dispositif de découplement et relié au moteur de déplacement, et en ce que ledit capteur ou commutateur de fin de course met au repos le moteur lorsqu'on atteint le couple de rotation limite.

6. Machine-outil selon l'une quelconque des revendications précédentes, caractérisée en ce que la bride menée (4), qui est reliée à la bride intermédiaire (5), s'appuie contre la broche (1) au moyen d'un palier additionnel (14).

7. Machine-outil selon l'une quelconque des revendications précédentes, caractérisée en ce que le plan de séparation entre les deux brides (11, 4) s'étend sous la forme d'une enveloppe conique, ayant la broche (1) en tant qu'axe de révolution.
